# EUROPEAN PATENT APPLICATION

(11) **EP 4 223 628 A1**
(43) Date of publication of application: **09.08.2023**
(21) Application number: 22154940.5
(22) Date of filing: 03.02.2022
(51) Int. Cl.: B63H 23/30, B63H 21/14, B63H 21/17

(54) **MARINE POWERTRAIN UNIT AND METHOD FOR POWERING A MARINE VESSEL**

(71) Applicant: Volvo Penta Corporation, 405 08 Göteborg (SE)
(72) Inventor: BRODÉN, Fredrik, 423 40 Torslanda (SE)
(74) Representative: Zacco Sweden AB

(57) **Abstract**

A powertrain for a marine vessel, comprising an internal combustion engine, a transmission, a first drive unit having a first propeller and a second drive unit having a second propeller, a first electric motor and a second electric motor, where the internal combustion engine is drivingly connected to the first drive unit and the second drive unit through the transmission, that the first electric motor is drivingly connected directly to the first drive unit and that the second electric motor is drivingly connected directly to the second drive unit.

## Description

### TECHNICAL FIELD

The present invention relates to a marine powertrain having two drive units and a method for driving a marine vessel. At low speeds, both forwards and reversing, the drive units are powered only by electric motors. At higher speeds, the drive units are powered by an internal combustion engine. It is also possible to power the drive units with both the internal combustion engine and the electric motors, e.g. when accelerating at higher speeds.

### BACKGROUND ART

Marine vessels, such as larger leisure boats, smaller ferries, commercial boats, rescue boats, etc., are often provided with two drive units. One reason is to provide more power, another reason is to improve manoeuvrability. Having e.g. an inboard propulsion system such as an IPS system as delivered by Volvo Penta, where the system comprises two individually controllable drive pods, fuel efficiency, manoeuvrability and comfort is increased considerably. There are also vessels provided with two inboard shafts, each driving a single propeller, or vessels provided with two sterndrives.

Regardless of the type of drive unit used, each drive unit is powered by an internal combustion engine that is connected to the drive unit through a transmission. The transmission transfers power from the engine of the boat to the propeller, and is provided with a gear ratio transmission that adapts the engine speed to the required propeller speed, and a reverse gear enabling the boat to reverse.

There is today, as for road vehicles, a demand for more environmental drive solutions for marine vessels. However, since batteries are relatively heavy and expensive, boats with fully electrical propulsion systems are still not feasible, especially not for larger boats and boats for commercial use. Instead, it has been suggested to use a hybrid solution, where an electrical motor is used for low speed manoeuvring in e.g. harbours. This type of solution is also well known for smaller boats, where a separate electric motor is often used e.g. during fishing when trolling.

Such a hybrid system is disclosed in US2021139123. This system comprises a first propulsion system comprising a single drive unit powered by an internal combustion engine and a second propulsion system comprising two separate drive units powered by separate electric motors. The system is controlled such that the first propulsion system is used at higher speeds and that the second propulsion system is used at low speeds when manoeuvring the boat. The drive unit of the first propulsion system is a sterndrive and the drive units of the second propulsion system are sterns drives. The first sterndrive is raised out of the water at low speeds, and the two second sterndrives are raised out of the water at higher speeds, in order to reduce drag.

This hybrid drive systems is relatively complicated and costly. There is thus a need for an improved drive system for marine vessels.

### DISCLOSURE OF INVENTION

An object of the invention is therefore to provide an improved powertrain for a marine vessel. A further object of the invention is to provide a method for driving a marine vessel. A further object of the invention is to provide a marine vessel comprising such a powertrain. An object is also to provide a computer program and a computer program product adapted to perform the steps of the method.

The solution to the problem according to the invention is defined by the claims directed to a powertrain, a method and a marine vessel. The claims also contain advantageous further developments of the inventive powertrain and method. Claims for a computer program and a computer program product are also enclosed.

In the inventive powertrain for a marine vessel, comprising an internal combustion engine, a transmission, a first drive unit having a first propeller and a second drive unit having a second propeller, a first electric motor and a second electric motor, the object of the invention is achieved in that the internal combustion engine is drivingly connected to the first drive unit and the second drive unit through the transmission, that the first electric motor is drivingly connected directly to the first drive unit and that the second electric motor is drivingly connected directly to the second drive unit.

With the inventive powertrain, it is possible to provide a simplified powertrain for a marine vessel that is driven by two drive units. With the inventive powertrain, low speed manoeuvring and reversing is performed by the electric motors, and the internal combustion engine is only used when driving the vessel forwards at higher speeds. In this way, there is no need for a mechanical reversing gear and no need for a mechanical transmission having different gear ratios. In conventional powertrains for marine vessels having two drive units, each drive unit is powered by a separate internal combustion engine. With the inventive powertrain, the two internal combustion engines can be replaced with a single, larger internal combustion engine. Further, since the vessel is driven by the electric motors at low speeds, the internal combustion engine can be used in conditions in which the efficiency of the internal combustion engine is higher. The internal combustion engine must thus not be used at low rotational speeds, where the efficiency is lower.

The drive unit of the vessel may be any type of a drive unit, such as an individually controllable drive pod (IPS) mounted underneath the vessel, an inboard shaft comprising a straight drive shaft connecting the engine/transmission with the propeller, or a sterndrive arranged at the rear of the vessel.

The powertrain may comprise a first clutch arranged between the transmission and the first drive unit and a second clutch arranged between the transmission and the second drive unit in order to disengage the internal combustion engine from the drive units. The clutches may be centrifugal clutches, but it would also be possible to use friction clutches. With a clutch, the internal combustion engine can be disengaged from the drive units. In this way, the electric motors can also be rotationally disconnected from each other, which may improve the manoeuvrability of the vessel. By this solution, the electric motors can be driven at different speeds, which improves the manoeuvrability. With an IPS solution, the drive unit can be rotated in any direction, but for stern drives and especially straight drive shafts, individual rotational speeds of the electric motors is of advantage. The transmission is in one example a belt drive connecting the internal combustion engine with pulleys arranged at the first drive unit and the second drive unit. It would also be possible to use a chain, even though this gives a noisier solution.

With the inventive powertrain, the marine vessel is arranged to be driven by the electric motors at speeds below a predefined speed, and by the internal combustion engine at speeds above the predefined speed. The speed may be defined in different ways, and is here referred to as the actual speed of the vessel, but the rotational speed of the propellers may also be used to define the speed parameters. It is also possible to use a combination of both rotational speed and actual vessel speed. E.g., when accelerating, it is also possible to drive the vessel with both the internal combustion engine and the electric motors. Further, two separate electric motors will also allow the propellers to be driven in different directions, that is forward and reverse, when manoeuvring at low speeds. This is especially advantageous for straight shaft drives and for sterndrives, but is also useful for IPS drives. The powertrain is provided with an electronic control unit (ECU) that controls the internal combustion engine and the electric motors. The ECU is connected to the regular control system of the marine vessel, and may e.g. be integrated in the regular control unit of the vessel. The ECU receives information from the regular control system of e.g. set speed, direction of travel, etc. In this way, the ECU can control the internal combustion engine and the electric motors to drive the vessel as required.

In a method for driving a marine vessel, where the marine vessel comprises two drive units arranged in parallel, where each drive unit comprises a propeller, where the marine vessel comprises an internal combustion engine, a transmission, and a first and a second electric motor, the steps of; driving the first drive unit with the first electric motor directly coupled to the first drive unit for speeds below a predefined speed; driving the second drive unit with the second electric motor directly coupled to the second drive unit for speeds below the predefined speed; and driving the first drive unit and the second drive unit with the internal combustion engine through the transmission for speeds above the predefined speed are disclosed.

By this first embodiment of the method, a marine vessel comprising two drive units can be driven in an efficient and energy saving manner by using the electric motors alone at low speeds and the internal combustion engine only at higher speeds, optionally together with the electric motors. At the same time, the manoeuvrability of the vessel is improved, especially at low speeds. The electric motors will drive the vessel both in a forward and in a reverse direction. This removes the need for a specific reversing gear, which reduces cost and weight, and at the same time increases reliability. Further, the method allows for the use of a single internal combustion engine, which saves further cost, weight and space.

### BRIEF DESCRIPTION OF DRAWINGS

The invention will be described in greater detail in the following, with reference to the attached drawings, in which
- Fig. 1: shows a schematic vessel provided with a powertrain,
- Fig. 2: shows a schematic powertrain, and
- Fig. 3: shows a schematic flow chart of the inventive method.

### MODES FOR CARRYING OUT THE INVENTION

The embodiments of the invention with further developments described in the following are to be regarded only as examples and are in no way to limit the scope of the protection provided by the patent claims.

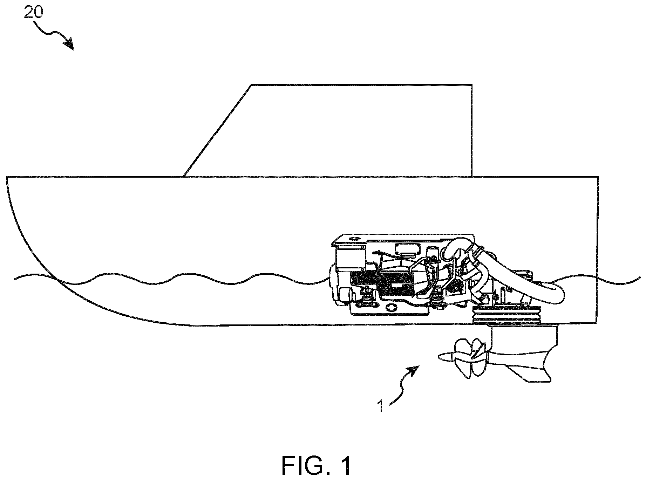

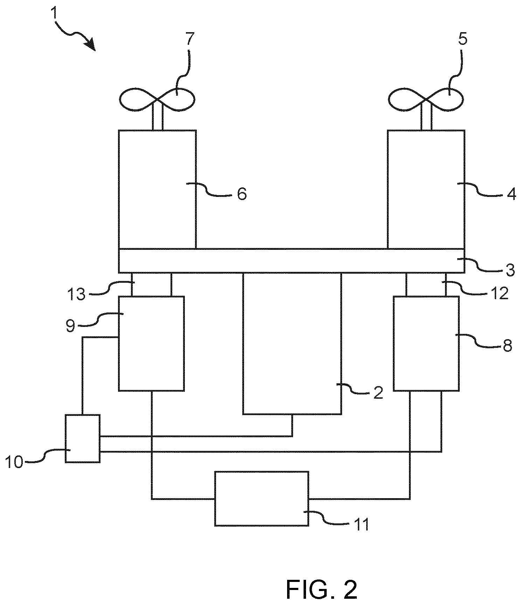

Fig. 1 shows a schematic marine vessel 20 provided with an inventive powertrain 1 for driving the vessel, and Fig. 2 shows a schematic powertrain 1. The powertrain is suitable to be used on different types of boats or watercrafts that are provided with two drive units. The drive units of the vessel may be any type of drive units, such as individually controllable drive pods (IPS) mounted underneath the vessel, inboard shafts comprising a straight drive shaft connecting the engine/transmission with the propeller, or sterndrives arranged at the rear of the vessel. In the described example, individually controllable drive pods will be used as an example of the drive units.

The vessel 20 is provided with a powertrain 1 comprising an internal combustion engine 2. The internal combustion engine may be any type of internal combustion engine driven by e.g. diesel, gasoline, natural gas, hydrogen or any other combustible fuel. The powertrain further comprises a transmission 3 arranged between the internal combustion engine and a first drive unit 4 and a second drive unit 6. At the first drive unit 4, a first electric motor 8 is arranged, and at the second drive unit 6, a second electric motor 9 is arranged. Each electric motor is directly drivingly connected to the respective drive unit. Each drive unit is provided with at least one propeller 5, 7.

The transmission 3 will transmit the power from the internal combustion engine to both drive units in equal amount, where the power ratio is fixed to split the power equally to the two drive units. The transmission must only transfer the power to the drive units in one direction, i.e. to drive the boat forwards, and must thus not be provided with a reversing gear. This makes the transmission less complicated, lighter and cheaper. In one embodiment, the transmission is a belt drive. A belt drive is light, simple and quiet, and will not transfer vibrations from the internal combustion engine to the drive units. The transmission may use a single belt to power both drive units, or may use two separate belts to power each drive unit. In this way, it is possible to drive the boat with the internal combustion engine even if one belt breaks. Preferably, reinforced rubber V-belts are used, but other types of V-belts or toothed belts may also be used. It is also possible to use a chain.

The powertrain is provided with a first electric motor 8 and a second electric motor 9. The first electric motor 8 is fixedly connected to drive the first drive unit 4 and the second electric motor 9 is fixedly connected to drive the second drive unit 6. An electric motor may be arranged on one side of the transmission with the drive unit on the other side of the transmission, or may be arranged between the transmission and the drive unit. In an example with belt drive and pulley wheels, the electric motor may be arranged on one side of the pulley wheel and the drive unit on the other side of the pulley wheel, or the electric motor may be arranged between the pulley wheel and the drive unit. An electric motor may also be integrated in the drive unit.

By using differently sized pulley wheels arranged at the output shaft of the internal combustion engine and at the input shafts of the drive units, the rotational speed transfer ratio between the internal combustion engine and the drive units can be set, such that the transmission of the drive unit can be simplified. The speed transfer ration depends on the internal combustion engine and the used propellers. Normally, a transfer ratio between e.g. 1,5 to 3 would be used, but other ratios are possible depending on the requirements. A typical 4 or 6 cylinder diesel engine will have an idle speed of around 600 rpm with a maximum speed of around 3500 rpm.

In one example, the powertrain is provided with a first clutch 12 arranged between the transmission and the first drive unit 4, and a second clutch 13 arranged between the transmission and the second drive unit 6. The first and the second clutch is in one example a centrifugal clutch that disengages the internal combustion engine from the drive units 4 and 6 when the rotational speed of the internal combustion engine is below a set rotational speed. This set speed is selected such that only the electric motors will drive the vessel at a speed below a predefined speed, and such that at least the internal combustion engine will drive the vessel above the predefined speed. A rotational speed of the internal combustion engine e.g. between 1000 rpm to 1400 rpm may be used as the set speed. The first and second clutch 12, 13 may also be a controllable friction clutch that can be disengaged when the boat travels at low speeds.

The set speed for the centrifugal clutches and the predefined speed for the vessel are preferably correlated, such that the internal combustion engine can be shut off when the vessel travels at speeds lower than the predefined speed. The first and second clutch 12, 13 may be arranged either at the output shaft of the internal combustion engine or at the input shafts of the drive units. Below this set speed, the internal combustion engine will be in an idle mode, where the internal combustion engine runs without driving the vessel. The vessel will in this case only be driven by the electric motors. This is advantageous in that the internal combustion engine can be shut off completely when the vessel enters a harbour or other area where the use of an internal combustion engine should be minimized or is prohibited. The reason may e.g. be to minimize noise and/or exhaust gases. A further advantage of using electric motors at low speeds is that for some internal combustion engine/propeller combinations, it is difficult to drive a vessel at a sufficiently low speed with an internal combustion engine running with an idle rotational speed. With an idle rotational speed of e.g. 600 rpm, the minimum speed of the vessel may be too high, which means that for a normal powertrain arrangement, the drive units may have to be engaged and disengaged constantly in order to reach a sufficiently low speed.

The powertrain 1 further comprises an electric control unit 10 and one or more batteries 11 arranged to power the electric motors. The batteries may be charged from the grid when the vessel is docked, or may be charged by the internal combustion engine when the vessel travels. This makes it possible to drive out of a harbour with electricity, to charge the batteries at sea such that the batteries are charged and can power the vessel when arriving at another harbour.

The electronic control unit (ECU) is arranged to control the internal combustion engine and the electric motors. The ECU is connected to the regular control system of the marine vessel, and may e.g. be integrated in the regular control unit of the vessel. The ECU receives information from the regular control system of e.g. desired speed, direction of travel, speed of the internal combustion engine, etc. The ECU can e.g. send control signals to a dedicated ECU of the internal combustion engine and to converters of the electric motors.

At a speed below the predefined speed, the vessel is driven by the electric motors. Depending on the desired speed and the desired direction of the vessel, the first and second electric motor are controlled to rotate with a desired rotational speed. The speed of the electric motors may be the same or may differ, and the rotational direction may also be the same or may differ, depending on the required manoeuvre of the vessel and the type of used drive unit. For an IPS drive unit, the manoeuvring may be performed by rotating the IPS drive units in desired directions, but for e.g. a straight shaft drive, the manoeuvring may be performed by rotating the electric motors in different directions and with different speeds.

When a speed above the predefined speed is desired, the internal combustion engine is started and when the rotational speed of the internal combustion engine is higher than the set speed for the centrifugal clutches, the internal combustion engine drives the vessel. The current to the electric motors can now be disconnected to save electricity. If the vessel accelerates, it is possible to aid the internal combustion engine with the electric motors in order to temporarily increase the available power. By using the electric motors as power supplement, it may e.g. be possible to replace a turbo of the internal combustion engine with the electric motors, which further saves cost and increases reliability.

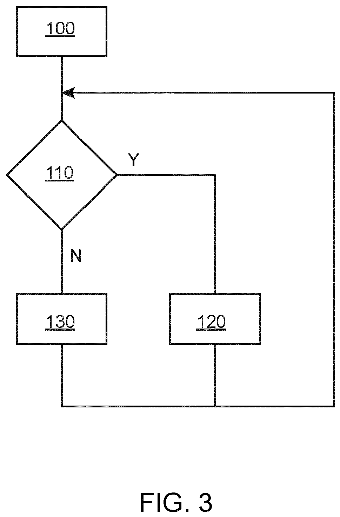

Fig. 3 shows a schematic flow chart of the method for driving a marine vessel.

In step 100, the control system of the marine vessel is initiated, such that the marine vessel is ready to drive. Here, the marine vessel stands still in e.g. a harbour. A speed signal with a desired speed is issued from the control system.

In step 110, it is determined if the desired speed of the vessel is above or below the predefined speed. The predetermined speed may in one example be the actual speed of the vessel, but may also be the rotational speed of the propellers or a value that combines both the actual speed of the vessel and the rotational speed of the propellers. This may be of advantage if there is a strong wind or strong water current, where a single speed value may not be enough to give a correct desired speed.

In one example, the predetermined speed corresponds to an actual speed of 5 knots for the vessel. If the desired speed is below this speed, the method continues with step 120. If the desired speed is above this speed, the method continues with step 130.

In step 120, the vessel is driven by the electric motors. The electric motors are controlled by the ECU to give the vessel the desired speed.

In step 130, the vessel is driven by at least the internal combustion engine. The internal combustion engine is controlled by the ECU to give the vessel the desired speed. The internal combustion engine can also be controlled together with the electric motors by the ECU to provide the vessel with a desired acceleration and speed with additional power from the electric motors.

The desired speed is constantly monitored, such that the correct drive mode is selected. In order to prevent constant drive mode change at a desired speed around the predefined speed, a hysteresis is preferably used. In one example, a hysteresis of 0,5 knots may be used, such that a drive mode change is made at 4,5 knots and 5,5 knots when the predefined speed is 5 knots.

The transition between one drive mode to the other is done in a controlled manner, such that the desired speed in achieved at all times. When the drive mode is to change from electric drive at a speed below the predefined speed to internal combustion engine drive at a speed above the predefined speed, the internal combustion engine is started before the electric drive is stopped such that the transition between the drive modes is smooth. The same applies when the drive mode is changed from internal combustion engine drive to electric drive. Here, the electric motors are started before the internal combustion engine is shut down, such that there is a driving force at all times.

The invention is not to be regarded as being limited to the embodiments described above, a number of additional variants and modifications being possible within the scope of the subsequent patent claims.

### REFERENCE SIGNS

- 1:: Powertrain
- 2:: Internal combustion engine
- 3:: Transmission
- 4:: First drive unit
- 5:: First propeller
- 6:: Second drive unit
- 7:: Second propeller
- 8:: First electric motor
- 9:: Second electric motor
- 10:: Electronic control unit
- 11:: Battery
- 12:: Clutch
- 13:: First freewheel clutch
- 14:: Second freewheel clutch

- 20:: Marine vessel

## Claims

1. A powertrain (1) for a marine vessel (20), comprising an internal combustion engine (2), a transmission (3), a first drive unit (4) having a first propeller (5) and a second drive unit (6) having a second propeller (7), a first electric motor (8) and a second electric motor (9), **characterized in that** the internal combustion engine (2) is drivingly connected to the first drive unit (4) and the second drive unit (6) through the transmission (3), that the first electric motor (8) is drivingly connected directly to the first drive unit (4) and that the second electric motor (9) is drivingly connected directly to the second drive unit (6).

2. Powertrain according to claim 1, wherein the powertrain (1) comprises a first clutch (12) arranged between the transmission (3) and the first drive unit (4) and a second clutch (13) arranged between the transmission (3) and the second drive unit (6) in order to disengage the internal combustion engine (2) from the drive units (4, 6).

3. Powertrain according to claim 2, wherein the first clutch (12) and the second clutch (13) are centrifugal clutches.

4. Powertrain according to claim 1 or 3, wherein the transmission (3) is a belt drive transmission.

5. Powertrain according to any of claims 1 to 4, wherein the first electric motor (8) is arranged to propel the first drive unit (4) and the second electric motor (9) is arranged to propel the second drive unit (6) at a speed below a predefined speed, both in a forward and reverse direction.

6. Powertrain according to any of claims 1 to 4, wherein the first electric motor (8) is arranged to propel the first drive unit (4) in a forward direction and the second electric motor (9) is arranged to propel the second drive unit (6) in a reverse direction.

7. Powertrain according to any of claims 1 to 6, wherein the internal combustion engine (2) is arranged to propel the first drive unit (4) and the second drive unit (6) through the transmission (3) only at a speed above a predefined speed.

8. Powertrain according to any of claims 1 to 6, wherein the internal combustion engine (2), the first electric motor (8) and the second electric motor (9) are arranged to propel the first drive unit (4) and the second drive unit (6) at a speed above a predefined speed.

9. Powertrain according to any of claims 1 to 8, wherein the powertrain (1) comprises an electronic control unit (10) arranged to control the internal combustion engine (2), the first electric motor (8) and the second electric motor (9).

10. Marine vessel (20), comprising a powertrain (1) according to any of claims 1 to 9.

11. Method for driving a marine vessel, where the marine vessel comprises two drive units arranged in parallel, where each drive unit comprises a propeller, where the marine vessel comprises an internal combustion engine, a transmission, and a first and a second electric motor, comprising the following steps:
- driving the first drive unit with the first electric motor directly coupled to the first drive unit for speeds below a predefined speed,
- driving the second drive unit with the second electric motor directly coupled to the second drive unit for speeds below the predefined speed, and
- driving the first drive unit and the second drive unit with the internal combustion engine through the transmission for speeds above the predefined speed.

12. Method according to claim 11, wherein the method further comprises the step of driving the first drive unit with the first electric motor and driving the second drive unit with the second electric motor when reversing the marine vessel.

13. Method according to any of claims 11 or 12, wherein the first electric motor, the second electric motor and the internal combustion engine are controlled by an electronic control unit.

14. A computer program comprising program code means for performing all the steps of claims 11 - 13 when said program is run on a computer.

15. A computer program product comprising program code means stored on a computer readable medium for performing all the steps of claims 11 - 13 when said program product is run on a computer.
